# EUROPEAN PATENT SPECIFICATION

(11) **EP 2 559 908 B1**
(45) Date of publication and mention of the grant of the patent: **23.05.2018**
(21) Application number: 12180440.5
(22) Date of filing: 14.08.2012
(51) Int. Cl.: F16D 41/00, F16D 41/18

(54) **Irreversible joint**
Irreversible Verbindung
Jonction irréversible

(30) Priority: 16.08.2011 IT TV20110118
(43) Date of publication of application: 20.02.2013
(73) Proprietor: Texa Dynamics S.R.L., 31050 Monastier di Treviso (TV) (IT)
(72) Inventor: Girotto, Adriano, 31027 Spresiano (TV) (IT)
(74) Representative: Citron, Massimiliano

(56) References cited:
- EP-A1- 0 878 635
- DE-C- 660 180
- GB-A- 1 324 079
- US-A1- 2004 216 981

## Description

The invention relates to an irreversible joint.

An irreversible joint is a mechanical device which comprises a driving element (input) and a driven element (output), both movable with respect to a fixed structure, usually a frame or a chassis. The driving element imparts a controlled thrust to the driven element to move it, and the purpose of the joint is to prevent a thrust transfer in the opposite direction, i.e. from output to input.

Known joints are constructed very similarly to free wheels, with an internal axis shaped in a particular way and an outer cylinder, wherein between the two are placed locking balls to unidirectionally transfer power from one to another (see e.g. http://www.directindustry.it/prod/siam-ringspann/irreversibiliruote-libere-bidirezionali-8966-32379.html). This is in essence a free wheel which can operate in both directions of rotation, the direction being selectable via a button. The problem is that one can select only one direction at a time, and manually.

DE 660 180 C discloses a free-wheeled clutch joint having between two rotating rotors a servo-device which connects by a relative movement of the two rotors.

The object of the invention is to obviate one or more of these problems, with a joint and/or method according to the appended claims, in which the dependent ones define advantageous variants.

The joint is requested to have the function of preventing the return motion of a driven output member whatever the direction of rotation of an input driving member that actuates it.

Preferably, the joint may be automatic, i.e. not requiring settings from the outside, and the joint according to the present invention can solve this problem too.

The inventive concept envisages that the joint comprises
- a driving member and a driven member, both movable rotatably with respect to a fixed structure;
- one or more thrust-transmitting members arranged between the driving member and the driven member so that they can transmit thrust from the driving member to the driven member and vice versa.

The joint is constructed so that between the driving member and the fixed structure there is a resistant force larger than that between the driven member and the fixed structure.

Preferably the resistant force is generated (in simple manner) by friction, so that the friction between the driving member and the fixed structure be raised with respect to that between the driven member and the fixed structure.

As preferred variants, to be used alone or in combination:
I. the driving member and the driven member are rotatable rotors about a same rotation axis;
II. there is a bearing member between the driven member and the fixed structure (to decrease the friction force);
III. between the driving member and the fixed structure there is direct contact or a bushing member (to increase the friction force);
IV. the thrust-transmitting member comprises one or more rolling members or contact bodies partially housed in seats present on the driving and driven rotors (compact and very stress-resistant solution). For instance the rolling members or contact bodies can be mounted on an annular structure with pivot axis perpendicular to said axis of rotation;
V. said seats may comprise substantially V- or U-shaped depressions in the body of a rotor, so as to generate precisely, and in simple manner to design, thrust forces having repeatable direction;
VI. the driving rotor, the one or more thrust-transmitting members and the driven rotor are arranged, in the order, one on the other to form a pack, which is clamped at both ends by the fixed structure (compact and cheap solution, and which exploits already existing friction in favor of the invention);
VII. the fixed structure may comprise a cylinder and the rotors may have toroidal shape to rotate around the cylinder (for maximum compactness and canceling of parasitic torques);
VIII. the fixed structure may comprise an inclined plane with respect to the axis of rotation that is in contact with a complementary inclined plane present on the driving rotor, in order to maximize the resistance force generated by the friction.

A method to create an irreversible joint may comprise
- setting a driving member and a driven member both movable with respect to a fixed structure;
- arranging one or more members between the driving member and the driven member so that they can transmit a thrust from one to the other;
- attaining between the driving member and the fixed structure a resistant force greater than that between the driven member and the fixed structure, e.g. by making (as said) the friction between the driving member and the structure greater than that between the driven member and the fixed structure.

The joint and the method take advantage of an asymmetric increase or decrease of the resistant force which acts on one of said two members, or in other words a difference between said resistant forces.

For the method according to the invention one can use all the variants I-VIII described and/or defined for the joint.

The joint according to the invention is very useful for unidirectional motion transfers, or for very precise position controls. E.g. an application of the joint may be its inclusion in the kinematic chain of a solar tracker, or to implement a solar tracker that comprises and/or integrates the joint.

The advantages of the invention will be more apparent from the following description of a preferred embodiment of the joint, making reference to the attached drawing in which
- Fig 1 shows a side view of the joint;
- Fig 2 shows a cross-sectional view of the joint along the plane II-II;
- Fig 3 shows an enlarged detail of Fig 2;
- Fig 4 shows an enlarged detail of the dashed circle of Fig 1;
- Figs. 5 and 6 show an operating diagram in two different operating conditions.
- Fig 7 shows an exploded view of the joint;
- Figure 8 shows an enlarged detail of the dashed circle of Fig 7.

A joint 10 comprises a fixed structure formed by a central cylinder 12, with axis X. A ring 16 is integral with one end of the cylinder 12, a cone or conical body 14 is integral with the other end.

Between the cone 14 and the ring 16 are sandwich-enclosed an input driving rotor 70 and an output driven rotor 30, which both have a toroidal shape to rotate coaxially about the axis X and the cylinder 12.

To reduce a lot the friction between the ring 16 and the rotor 30, between the two there is a bearing (means) 40 formed by an annular cage 44 which mounts idle rollers 42 (with axis Z perpendicular to the axis X).

Instead, the friction between the cone 14 and the rotor 70 is not decreased, on the contrary the two are in direct contact on an inclined sliding plane 18.

Between the two rotors 70. 30 is present a means 50 for transferring torque from one to another, comprising an annular cage 54 on which are radially pivoted (with Y axis perpendicular to the X axis) some idle rollers 52. The means 50 can be e.g. a member such as the bearing 40.

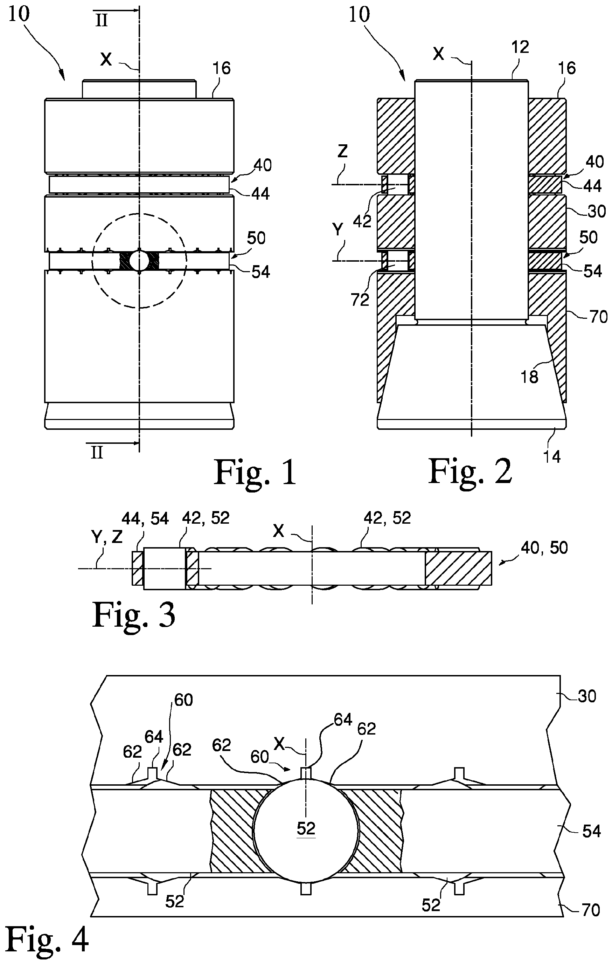

Thus, starting from the top of Figure 2 in the order we find packed:
- the ring 16,
- the bearing 40,
- the rotor 30,
- the means 50,
- the rotor 70 and
- the cone 14.

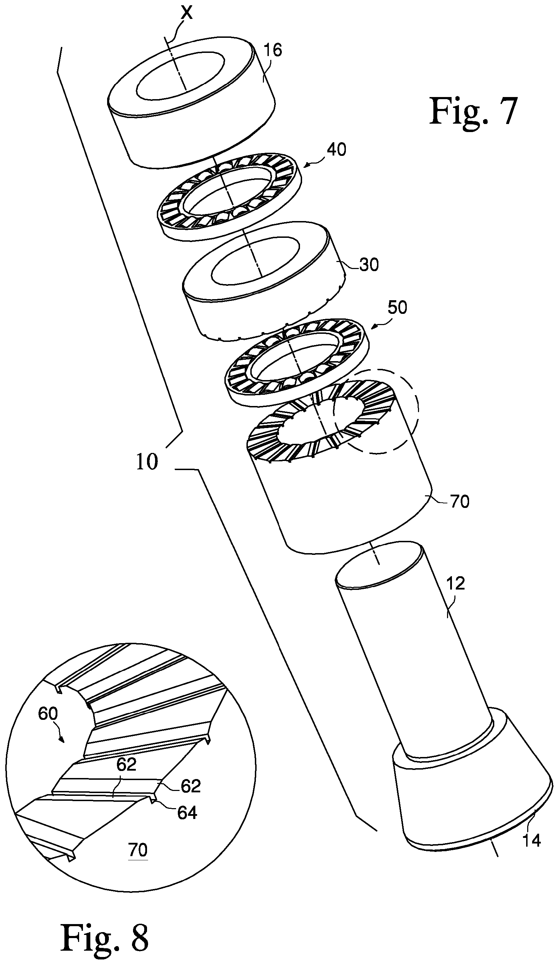

The rotors 70, 30 have on the crown in contact with the means 50 some seats 60 to contain the portion of the rollers 52 which protrudes from the cage 54 along the X axis (see Fig. 4 and 8). The seats 60 are formed by a recess which comprises two specular inclined planes 62 and a groove 64 (the bottom of the processing letting the grind-machine pass therein). The planes 62, in the assembled joint, are arranged tangentially to each roller 52, two above and two below and symmetrically with respect to a plane passing through the axis X.

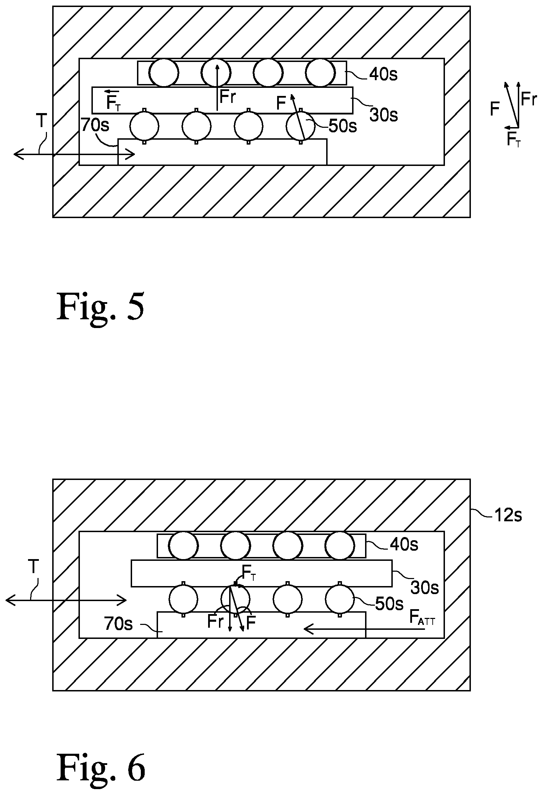

To explain the principle of the joint 10 we refer to Figures 5-6, which illustrate the components thereof developed in plan view. We will keep, therefore, the same references for same parts already described, because equivalent, while only adding a suffix "s" to distinguish them in the drawing.

We have the correspondence:
- central cylinder 12 + conical body 14 + ring 16 ↔ fixed structure 12s;
- input rotor 70 ↔ movable input element 70s;
- output rotor 30 ↔ movable output element 30s;
- bearing 40 ↔ cushion 40s;
- means 50 for transferring torque ↔ rollers 50s;
- inclined planes 62 ↔ inclined planes 62s.

When (fig. 5) the element 70s moves linearly (direction T) it pushes the rollers 50s towards the element 30s, in turn pushed on the bearing 40s. The force F exerted by the element 70s has direction determined by the inclination of the inclined planes 62s, namely it is inclined with respect to the direction T of displacement of the elements 30s, 70s. Therefore, the force F is decomposed into two orthogonal components, Fᵣ and F_{T}. The first is orthogonal to the bearing 40s, the second is parallel thereto (also to T). The force Ft moves the element 30s, while the force Fᵣ is discharged onto the bearing 40s, which converts it into a very small resisting friction force by virtue of its rollers with rolling friction.

When instead (Fig. 6) it is the element 70 to impart a force along T, the action line of the force F is the same as before but the direction is opposite, as well as the direction of the components Fᵣ and F_{T}. Now the force Fr is discharged directly on the element 70s, which transfers it to the structure 12s. Between the last two a very large resisting friction force Fₐₜₜ arises by virtue of high mutual sliding friction coefficient. By suitably designing the shape of the planes 62, 62s and choosing the materials of the elements 30s, 70s, 30, 70 and/or their mutual friction coefficients, one can obtain that the force Fₐₜₜ is greater than F_{T}, thus the element 70s does not move.

Therefore by exploiting a difference in the friction coefficients within the joint, in particular those between each rotor and the fixed structure, we obtain an asymmetric and unidirectional behavior of the motion transfer members.

Note that the inclined plane 18 facilitates a greater frictional force between the cone 14 and the rotor 70, thereby improving the irreversibility. It works in practice as the rollers 52 trapped between the two V-grooves by the planes 62. If the axial force exerted on the rotor 70s by the rotor 30s is decomposed along the directrix orthogonal to the inclined plane 18 one obtains a compression force of the inclined faces contacting each other greater than the axial force. This promotes the increase of the friction forces that is released between the two inclined surfaces 18. In any case, the conical coupling is not needed if the V-grooves formed by the planes 62 are dimensioned with a greater angle

## Claims

1. Irreversible joint (10) for coupling rotating members, comprising
- a driving member (70) and a driven member (30), both rotatably movable with respect to a fixed structure (12, 14, 16);
- one or more thrust-transmitting members (52) arranged between the driving member and the driven member so that the driving member can transmit an axial thrust to the driven member ;
**characterized in that** between the driving member and the fixed structure there is a force resisting to relative rotation larger than that between the driven member and the fixed structure.

2. Joint according to claim 1, wherein the resistant force is generated by friction force.

3. Joint according to claim 2, wherein the driving member and the driven one each comprise a rotor rotatable about a same axis (X) of rotation.

4. Joint according to claim 3, wherein the fixed structure comprises a cylinder (12) and the rotors have toroidal shape to rotate around the cylinder.

5. Joint according to claim 3, wherein the fixed structure comprises an inclined plane (14) with respect to the axis of rotation (X) that is in contact with a complementary inclined plane (18) present on the driving rotor (70).

6. Joint according to one of the preceding claims, comprising a bearing member (40) between the driven member and the fixed structure.

7. Joint according to one of the preceding claims, wherein between the driving member and the fixed structure there is direct contact or a bushing member.

8. Joint according to one of claims 3 to 7, wherein a thrust-transmitting member comprises one or more rolling members (52) or contact bodies partially housed in seats present on the driving and driven rotors.

9. Joint according to claim 8, wherein the rolling members or contact bodies are mounted on an annular structure (54) with pivot axis perpendicular to said axis of rotation.

10. Joint according to claim 8 or 9, wherein said seats comprise substantially V- or U-shaped depressions (62) in the body of a rotor.

11. Joint according to claims 3 to 10, wherein the driving rotor, the one or more thrust-transmitting members and the driven rotor are arranged, in the order, one on the other to form a pack or pile, which is clamped at both ends by the fixed structure.

12. Solar tracker comprising a kinematic chain comprising or integrating the joint as in any one of the preceding claims.

13. Method to create an irreversible joint for coupling rotating members, comprising
- setting a driving member (70) and a driven member (30) both rotatably movable with respect to a fixed structure (12);
- arranging one or more members (50) between the driving member (70) and driven member (30) so that the driving member can transmit an axial thrust to the driven member;
- making a force resisting to relative rotation between the drive member (30) and the structure (12) greater than that between the driven member (30) and the fixed structure (12).

## Patentansprüche

1. Irreversibles Gelenk (10) zum Koppeln rotierender Elemente, bestehend aus
- einem Antriebselement (70) und einem angetriebenen Element (30), beide einer festen Struktur (12, 14, 16) gegenüber rollend beweglich;
- einem oder mehrerer Schub-Senderelemente (52), die zwischen dem Antriebselement und angetriebenen Element angebracht sind, so dass das Antriebselement einen axialen Schub an das angetriebene Element übertragen kann;
**dadurch gekennzeichnet, dass**
zwischen dem Antriebselement und der festen Struktur eine Kraft besteht, die widerstandsfähig gegen größere Relativbewegung als jene Kraft zwischen angetriebenem Element und fester Struktur ist.

2. Gelenk nach Anspruch 1, wobei die Widerstandskraft durch Reibungskraft erzeugt wird.

3. Gelenk nach Anspruch 2, wobei das Antriebselement und das angetriebene Element je einen Rundläufer um eine gleiche Drehachse (X) haben.

4. Gelenk nach Anspruch 3, wobei die feste Struktur einen Zylinder (12) umfasst und die Rotoren Torusform haben, damit sie um dem Zylinder drehen.

5. Gelenk nach Anspruch 3, wobei die feste Struktur eine schiefe Ebene (14) gegenüber der Drehachse (X) umfasst, die mit einer zusätzlichen geneigten Ebene (18) im Antriebsrotor (70) verbunden ist.

6. Gelenk nach einem der vorstehenden Ansprüche, umfassend ein Wälzlagerelement (40) zwischen dem angetriebenen Element und der festen Struktur.

7. Gelenk nach einem der vorstehenden Ansprüche, wobei zwischen Antriebselement und fester Struktur direkter Kontakt oder ein Gleitlagerelement besteht.

8. Gelenk nach einem der Ansprüche von 3 bis 7, wobei ein Schub-Senderelement ein oder mehrere rollende Elemente (52) oder Kontaktkörper umfasst, die teilweise an Stellen auf den angetriebenen Rotoren und Antriebsrotoren angeordnet sind.

9. Gelenk nach Anspruch 8, wobei die Rollelemente oder Kontaktkörper auf einer ringförmigen Struktur (54) mit Schwenkachse senkrecht zur besagten Drehachse angebracht sind.

10. Gelenk nach dem Anspruch 8 oder 9, wobei besagte Stellen im Körper eines Rotors im Wesentlichen "V"- oder "U"-förmige Senken (62) enthalten.

11. Gelenk nach den Ansprüchen von 3 bis 10, wobei der Antriebsrotor, das eine oder die mehreren Schub-Senderelemente und der angetriebene Rotor in der Reihenfolge aufeinander folgend angeordnet sind und ein Paket oder einen Stapel bilden, das an den beiden Enden der festen Struktur geschlossen ist.

12. Solar-Nachführsystem bestehend aus einer kinematischen Kette, einschließlich beziehungsweise Bestandteil des Gelenks entsprechend einer der vorhergehenden Ansprüche.

13. Methode, um ein irreversibles Gelenk herzustellen, um rotierende Elemente zu koppeln, bestehend aus
- einem Antriebselement (70) und einem angetriebenen Element (30), beide einer festen Struktur (12) gegenüber drehend beweglich;
- einem oder mehrerer Elemente (50), die zwischen dem Antriebselement (70) und angetriebenen Element (30) so angebracht sind, dass das Antriebselement einen axialen Schub an das angetriebene Element übertragen kann;
- eine Kraft, welche die Relativdrehung zwischen dem Antriebselement (30) und der Struktur (12) widerstandsfähiger macht als jene Kraft zwischen dem angetriebenen Element (30) und der festen Struktur (12).

## Revendications

1. Joint irréversible (10) pour coupler des éléments rotatifs, comprenant
- un élément moteur (70) et un élément entraîné (30), tous deux mobiles de façon pivotante par rapport à une structure fixe (12, 14, 16) ;
- un ou plusieurs éléments (52) transmetteurs de poussée placés entre l'élément moteur et l'élément entraîné, de manière à ce que l'élément moteur puisse transmettre une poussée axiale à l'élément entraîné ;
**caractérisé par le fait**
**qu'**entre l'élément moteur et la structure fixe, il existe une force de résistance au mouvement relatif plus importante que celle existant entre l'élément entraîné et la structure fixe.

2. Joint selon la revendication 1, dans lequel la force résistante est générée par la force de frottement.

3. Joint selon la revendication 2, dans lequel l'élément moteur et l'élément entraîné comprennent chacun un rotor pivotant autour d'un même axe (X) de rotation.

4. Joint selon la revendication 3, dans lequel la structure fixe comprend un cylindre (12) et où les rotors ont une forme toroïdale pour tourner autour du cylindre.

5. Joint selon la revendication 3, dans lequel la structure fixe comprend un plan incliné (14) par rapport à l'axe (X) de rotation, qui est en contact avec un plan incliné complémentaire (18) présent dans le rotor moteur (70).

6. Joint selon l'une quelconque des revendications précédentes, comprenant un élément à roulement (40) situé entre l'élément entraîné et la structure fixe.

7. Joint selon l'une quelconque des revendications précédentes, dans lequel entre l'élément moteur et la structure fixe, il y a un contact direct ou un élément palier.

8. Joint selon l'une des revendications 3 à 7, dans lequel un élément transmetteur de poussée comprend un ou plusieurs éléments roulants (52) ou corps de contacts partiellement logés dans des logements présents sur les rotors entraîné et moteur.

9. Joint selon la revendication 8, dans lequel les éléments roulants ou les corps de contact sont montés sur une structure annulaire (54) en ayant un axe de pivotement perpendiculaire à l'axe de rotation.

10. Joint selon la revendication 8 ou 9, dans lequel les logements comprennent des dépressions (62) ayant une forme fondamentalement en V ou en U dans le corps d'un rotor.

11. Joint selon les revedications 3 à 10, dans lequel le rotor moteur, le ou les éléments transmetteurs de poussée et le rotor entraîné sont placés, dans l'ordre, l'un sur l'autre pour former un paquet ou une pile, qui est serré(e) à ses deux extrémités par la structure fixe.

12. Suiveur solaire comprenant une chaîne cinématique comportant ou intégrant le joint tel que selon l'une quelconque des revendications précédentes.

13. Procédé pour réaliser un joint irréversible destiné à coupler des éléments rotatifs, comprenant le fait de
- disposer un élément moteur (70) et un élément entraîné (30), tous deux mobiles de façon pivotante par rapport à une structure fixe (12) ;
- disposer un ou plusieurs éléments (50) entre l'élément moteur (70) et l'élément entraîné (30), de manière à ce que l'élément moteur puisse transmettre une poussée axiale à l'élément entraîné ;
- rendre une force résistante à la rotation relative entre l'élément moteur (30) et la structure (12) plus importante que celle existant entre l'élément entraîné (30) et la structure fixe (12).
